# EUROPEAN PATENT APPLICATION

(11) **EP 1 491 246 A1**
(43) Date of publication of application: **29.12.2004**
(21) Application number: 03076960.8
(22) Date of filing: 23.06.2003
(51) Int. Cl.: B01D 15/08

(54) **Separation method for bioparticles**

(71) Applicant: STICHTING VOOR DE TECHNISCHE WETENSCHAPPEN, 3527 JP Utrecht (NL)
(72) Inventor: Homeman, Danielle Amanda, 2728 GK Zoetermeer (NL); Ottens, Marcel, 2313 RC Leiden (NL); Van der Wielen, Lucas Antonius Maria, 2665 AR Bleiswijk (NL); Van Roosmalen, Dick, 5621 HR Bleiswijk (NL); Van den Broeke, Leo Jacques Pierre, 1076 VR Amsterdam (NL); Keurentjes, Johannes Theodorus Faustinus, 5708 EH Helmond (NL)
(74) Representative: Prins, Adrianus Willem, Mr. Ir.

(57) **Abstract**

The present invention relates to a method for the removal of bioparticles, including biomolecules from an aqueous solution or dispersion of biological materials containing said bioparticles, using gel permeation chromatography using a mobile and a stationary phase, said method comprising subjecting the said aqueous solution or dispersion of biological material containing said bioparticles, to gel permeation chromatography in the presence of micelles of a ionic or non-ionic surfactant, whereby the said surfactant has substantially no interaction with the bioparticles.

## Description

The invention relates to a method for the removal of bioparticles from an aqueous solution or dispersion of biological materials containing said bioparticles, using gel permeation chromatography using a mobile and a stationary phase.

One of the critical steps in the manufacturing of biological materials is the isolation and purification of the desired material from a complex medium. For example, in the cases of protein inclusion bodies, organelles or virus particles produced or generated through fermentation, separation or concentration of the desired material from contaminating materials in large-scale manufacturing is always necessary. In addition, preparation of purified bioparticles extracted from natural materials also requires purification or concentration steps that are often complex, time consuming, and costly. Purification of biological fluids, such as blood or blood products is also very complex, especially as the valuable components are susceptible to degradation and/or denaturation as a consequence of the treatment.

Commonly used separation and purification methods include centrifugation, chromatography, and membrane filtration. However, centrifugation, which utilizes a density gradient, may disrupt the structure of bioparticles, and the capability of scaling up the centrifugation operation is limited.

Membrane filtration is easy to operate, but it may involve the application of pressure, which may be detrimental to certain materials. Membrane filtration also is limited in terms of the degree of separation of biological particles, which may provide a hazard if the said bioparticles are viruses, bacteria or other infectous biological materials.

Other separation methodologies include two-phase liquid-liquid extraction methods. The traditional liquid -liquid extraction method utilizes two partially immiscible phases formed by contacting an organic phase with an aqueous phase. The disadvantage of this approach follows from the possible adverse effects of an organic solvent on the conformations and functions of biological molecules. An alternative liquid-liquid extraction method utilizes two-phase aqueous systems formed by using water-soluble polymers. Certain aqueous solutions containing two types of water-soluble polymers will separate into two coexisting phases, with each phase containing predominantly only one type of polymer. The most commonly used polymers are dextran and poly(ethylene oxide). The use of this type of systems is exemplified by Harrison et al. who reported the concentration of spermatozoa by these means. The main disadvantages of this method are (1) the necessary separation of the water soluble polymers and the particulate product, because of the high viscosity of the resulting solution and (2) the high consumption of these polymers per unit of desired product separated.

Another approach using a two-phase aqueous system is mentioned by Blankschtein et al. (WO-A 9705480), which relies on the ability of surfactants to form micelles. Surfactants are molecules composed of a hydrophilic moiety, which is soluble in water, and a hydrophobic moiety, which is not. This duality towards an aqueous environment leads to a broad spectrum of complex self-association phenomena which simple solutes do not exhibit in water. In order to avoid contact of the hydrophobic moieties with water, the individual surfactant molecules self-associate to form aggregate structures known as micelles. Whereas these micelles are hydrophilic on the exterior surface, they possess a hydrophobic and non-aqueous core. Typically, micellization, that is, the formation of micelles, occurs beyond a threshold surfactant concentration, known as the critical micelle concentration (CMC), below which surfactant molecules are predominantly dispersed as monomers and above which they begin to form micelles. The dual hydrophobic / hydrophilic environment provided by micelles has been exploited to separate and concentrate biological molecules according to their hydrophobicity using an aqueous solution of the non-ionic surfactant Triton X-114, which, under certain conditions, separates into two phases.

In this system, the biological materials are concentrated in the phase containing a high concentration of micelles with the more hydrophobic analytes being separated from the contaminants by incorporation into the cores of the micelles. In order to further purify the hydrophobic material separated in this way, a series of extraction steps may be required to extract the analyte which has been incorporated within the micelles. Based on the principles laid out by Bordier (J. Biol. Chem., 256, 1604-1607, 1981) in which the hydrophobic proteins may be incorporated into the core of micelles in the micelle-rich phase of a two-phase aqueous system, a method was developed for retrieving hydrophilic proteins in the micelle-rich phase by causing the hydrophilic proteins to be retained by ligands on the surface of micelles. In all the above systems, the experimental conditions are driven by the theory that a material of interest be separated according to its degree of hydrophobicity. Accordingly, hydrophobic materials are concentrated in the micelle-rich phase, and the remainder of the material, considered to be waste, passes into the second phase of the two-phase aqueous system, identified in the above references as the aqueous phase.

This theory is substantially different from that disclosed by Nikas et al. (Macromolecules, 25, 4797-4806, 1992, ); and Liu et al. (AIChE J., 41, 991-995, 1995), who identified a principle of separation that relies on volume exclusion and not on the degree of hydrophobicity, where the analyte could be partitioned into the second phase of the two-phase aqueous system, identified as micelle-poor. According to Nikas et al. and Liu et al., the volume exclusion of molecules from the micelle-rich phase could be using preselected micelle shapes. Nikas et al. and Liu et al. supported their theory of volume exclusion by describing the partitioning behavior of preparations containing single hydrophilic proteins in aqueous micellar phases containing cylindrical micelles.

In WO-A 9705480 a method for size separating a mixture of reagents including an analyte and at least one contaminant of different size is described, said method comprising:
(a) providing at least one surfactant, the surfactant being capable under selected conditions of forming a two-phase aqueous micellar system having a micelle-rich phase and a micelle-poor phase;
(b) forming the two-phase aqueous micellar system containing surfactant as specified in (a) in the presence of the mixture of reagents; and
(c) permitting the analyte and the contaminant to partition unevenly between the two phases so as to cause at least partial separation of the analyte from the contaminant on the basis of size.

This method does provide some degree of separation of, for example viruses, however, the degree of separation is still insufficient for most purposes.

Accordingly, there is still a need for identifying effective methods of separating or concentrating an analyte from a mixture where the methods are simple to implement, do not involve denaturing steps, are applicable to a wide range of materials, and can be easily scaled up.

In addition, in case of viruses and other infectious bioparticles, surfactants are commonly used to disrupt them or otherwise chemically destroy them and to substantially increase the safety of the final product (Harrison R.G. et al, Bioseparations Science and Engineering, Oxford Univ. Press, 2003),. These socalled 'surfactant steps' are usually time consuming, add negatively to the process economy and may cause degradation and/or denaturation of the biotechnological product. In other cases, surfactants and comparable molecules are also used in the formulation of biopharmaceutical products, such as octanoate in the formulation of human serum albumin. Hence, surfactants are a common class of chemicals in bioprocesses, that must be used with the lowest possible amount.

The invention has as one of the objects to provide a method for the decrease in contaminants in biological fluids, said contaminants being bioparticles, including biomolecules having a size between 5 nm and 10 µm, more in particular viruses. More in particular, the invention has as an object to reduce the amount of such contaminants, more in particular viruses, bacteria and other infectous bioparticles to a degree of at least a factor 1000, preferably up to a factor 1,000,000.

More in particular the invention is concerned with a situation where a desired bioproduct (biomolecules or bioparticles), are to be separated from undesired bioparticles such as viruses, bacteria and other infectous bioparticles

The invention is accordingly directed to a method for the removal of bioparticles, including biomolecules from an aqueous solution or dispersion of biological materials containing said bioparticles, using gel permeation chromatography using a mobile and a stationary phase, said method comprising subjecting the said aqueous solution or dispersion of biological material containing said bioparticles, to gel permeation chromatography in the presence of micelles of a ionic or non-ionic surfactant, whereby the said surfactant has substantially no interaction with the bioparticles.

More in particular the invention is concerned with the removal of bioparticles having a size of between 5 nm en 10 µm, such as those ranging in size from viruses to bacteria and other micro organisms. The present invention is based on the effect of the micelles in the mobile phase that improves the selectivity and/or effectivity and/or productivity of the removal of the bioparticles from the aqueous solution or dispersion of biological materials. These micelles do not interact with the bioparticles, which i.a. means that the micelles do not take up the biomolecules in their interior and/or bind the biomolecules to either the polar or apolar part of the surfactant and/or that the surfactant deactivates or destroys the bioparticles, more in particular the viruses.

The micelles are present in the mobile phase of the gel permeation chromatography system (which term includes gel filtration and size exclusion chromatography as equivalent methods). The micelles are formed from the surfactant, once the concentration thereof is above the CMC, as defined hereinabove.

Most surfactant micelles have a hydrophobic core and a hydrophilic 'mantle'. The (smallest) radius of the hydrophobic core is about 70-80 % of the extended hydrocarbon tail of the surfactant. The radius of the hydrophilic mantle is depending on the length of the hydrophilic tail.

The aggregation number is an indication of the shape of micelles. Aggregation numbers can vary between 5-5000. A micelle with a low aggregation number will form spherical micelles. The higher the aggregation number the more stretched (cylindrical) the surfactant will be.

The aggregation number is depending on the ratio of the hydrophilic and hydrophobic part of the surfactant molecule. An increase in hydrophobicity leads to an increase in the aggregation number.

Depending on the nature and concentration of the surfactant, as well as components in the aqueous medium, the shape of the micelles may be different, such as cylindrical, round, ellipsoidal and the like.

The shape can become more complex at high surfactant concentration. Also additives can have an influence on the size and shape of the micelles. An increase in temperature gives an increase in aggregation numbers. The shape of the micelles is important for the effect on the treatment, as well as the volume of the micelles in the mobile phase is. The influence of the shape of the micelles, particularly their dimensions, is important, as many tiny micelles provide a much larger 'excluded' volume then a few (let's say a single) at the same volume fraction.

The micelles are preferably small and spherical. Preferably their volume is between 0.1 and 50vol.%, preferably 1-30 vol.%.

The amount of surfactant is an important factor in determining the volume of the micelles in the aqueous system and may vary considerably, dependent on the various variables playing a role therein. The amount exceeds the CMC, preferably it is at least 1.01 times the CMC and may be up to 7*10⁶ times the CMC. In practice the amount of surfactant in the mobile (aqueous phase) will be between the CMC, or slightly above that and about 50 wt.%, more preferred 5 to 25 wt.% more in particular 5 to 15 wt.%.

The micelles have the function of improving the separation in selectivity and effectivity, more in particular when the removal of the bioparticles is combined with another treatment or separation of the biological material.

Suitable surfactants are non-ionic, cationic, anionic and zwitterionic surfactants. Preferred surfactants are the non-ionic surfactants, as these surfactants have a minimal interaction with the bioparticles and solutes except for the volume exclusion interaction. Examples thereof are the various polymers and copolymers of ethylene oxide and propylene oxide, and derivatives thereof, preferably having a molecular weight of at least 150, preferably up to 10,000. Specific examples are polyoxyethylene glycol monoethers, polyoxyethylene methyl-n-alkylethers, the various copolymers of EO and PO, t-octylphenoxy polyoxyethylene ethers, polyoxyethylene nonyl phenyl ethers, polyoxyalkylene derivatives of sorbitan or of fatty acids.

As most of these surfactants are also used in processes of treating biological materials, as defined above, their presence in the purified product is not a great problem. Further, it is to be noted that especially in case of the application of the process of the invention in combination with gradient simulated moving bed technology, the amount of surfactants in either the purified biological material and the raffinate (bioparticle flow) may be kept very low.

The method of the invention is suitably carried out in conventional GPC methods, such as fixed bed, simulated moving bed, gradient simulated moving bed (SMB) or true moving bed systems, such as known in the art. The stationary phase of the systems is preferably selected from cross-linked or entangled polymers such as agarose, dextran and acrylamides, and derivatives thereof.

In a preferred embodiment of the invention, the removal of the undesired bioparticles from the biological fluid is combined with the separation of at least some of the other components of the biological fluid, such as proteins, DNA, and peptides.

It is preferred to use a simulated moving bed system or a gradient simulated moving bed system, such as described in Houwing et al., AIChE J, 2002 or in WO-A 0033934.

In a simulated moving bed, a feed stream can be separated into two fractions by the simulated countercurrent movement of an adsorbent and a liquid stream. Many known SMB systems consist of 4 sections with one feed stream, one desorbent stream and two product streams. By correct selection of the ratio of liquid to solid flow rates in each of the sections, weakly retained components (B) move towards the raffinate outlet and strongly retained components (A) move towards the extract outlet.

This SMB device contains a (non functionalized) gel material and has at least one inlet for the feed stream, one inlet for the desorbent stream. The two outlet streams are the extract stream containing component A and the raffinate stream containing component B. At least one of the feed streams or the desorbent stream contains a non-ionic surfactant at such concentration and temperature that it has formed micelles. In each section m is defined as the ratio of the liquid flow and the sorbent flow in this section.

The separation in a SMB device mainly takes place in the two sections around the inlet of the feed stream containing component A and B. Component B should move upstream with respect to the liquid flow in the SMB and component A should move downstream with respect to the liquid flow in the SMB.

The embodiment of the invention including the gradient simulated moving bed provides a method that minimises the contact between the undesired particles (say viruses) and the stationary phase, thereby reducing the risk of product contamination, batch-to-batch carry over, while being integrated in one single chromatographic step (instead of having both steps). This integrated chromatographic separation - viral clearance step - simultaneously may also be used to purify the desired bioproduct from a third component such as a protein.

An advantage of the combined use of such an SMB method and the method of the invention resides therein the integration enables one to dispense with one process step and that the amount of contaminating surfactant in the target solute, generally a protein solution, is kept low.

In this system two different separation aspects of treating biological materials are solved, namely the separation of the bioparticles from the biological materials and the separation of components of the biological materials from each other (generally proteins).

In such a situation it is to be noted that the size of the micelles to be used in the mobile phase is preferably in the same range (order of magnitude) as the size of the biological materials (proteins) to be separated from each other in the SMB system. This will also be optimal from a viral clearance point of view.

### EXAMPLE

Viral clearance of Human Serum Albumin (HSA) using gradient, surfactant-aided size exclusion SMB chromatography.

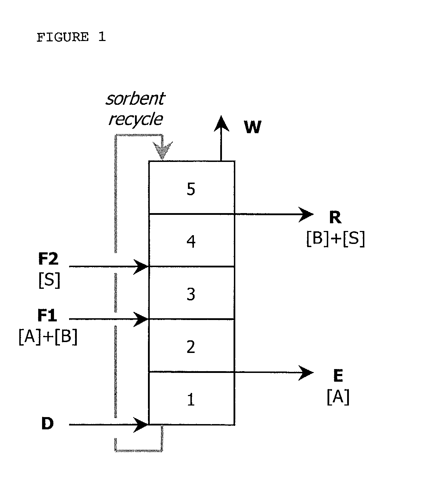

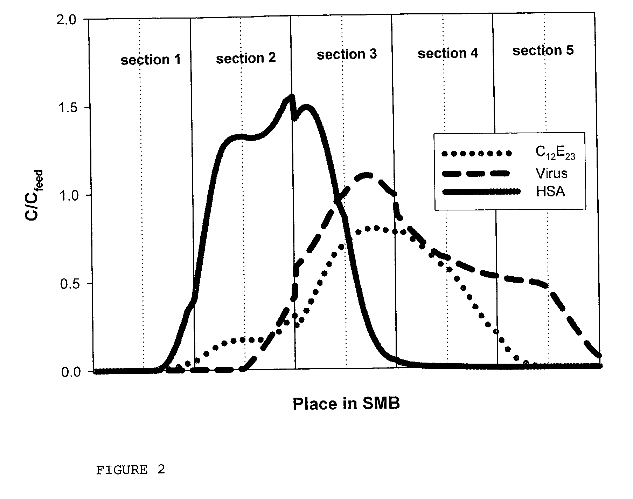

For this separation a 5-section SMB is used, with two columns per section, as shown in figure 1.A feed stream with HSA and parvovirus having a size of 10 nm is introduced into the SMB between section 2 and 3. This virus is very difficult to remove using conventional methods due to its small size. A feed stream with surfactant is introduced between section 3 and 4. An extract stream with HSA is discharged between section 1 and 2 and a raffinate stream with surfactant and virus is discharged between section 4 and 5. A desorbent stream without surfactant is introduced at section 1 and a waste stream is discharged from section 5.. Each section has 2 columns with a length of 10 cm and a diameter of 1 cm.

The concentration of HSA in the feed stream was 5 g/l, the concentration of virus particles was 10¹² particles/ml. The surfactant concentration in the second feed stream was 0.2 wt% of C₁₂E₂₃ (Brij35)
The following flow ratio's have been chosen:
m₁ = 1.02
m₂ = 0.2
m₃ = 0.55
m₄ = 0.7
m₅ = 0.1

The figure gives the average relative concentration profile, with respect to the concentration in feed, when the system is in steady state. It clearly shows a separation of HSA and the virus. The virus is removed by a log reduction of 6.8, the recovery of HSA is 93 %, and the enrichment of HSA is 39.6 %.

## Claims

1. Method for the removal of bioparticles, including biomolecules from an aqueous solution or dispersion of biological materials containing said bioparticles, using gel permeation chromatography using a mobile and a stationary phase, said method comprising subjecting the said aqueous solution or dispersion of biological material containing said bioparticles, to gel permeation chromatography in the presence of micelles of a ionic or non-ionic surfactant, whereby the said surfactant has substantially no interaction with the bioparticles.

2. Method according to claim 1, wherein the volume of the micelles in the mobile phase is between 0.1 and 30 vol.%, preferably between 1.0 and 20 vol.%.

3. Method according to claim 1 or 2, wherein the said bioparticles are selected from the group of bioparticles having a size between 5 nm and 10 µm, preferably from the group consisting of viruses, bacteria, cells and cell debris.

4. Method according to claim 1-3, wherein the said surfactant is a non-ionic surfactant, which is preferably selected from the group of polyethers and polyether derivatives.

5. Method according to claim 4, wherein the said non-ionic surfactant is selected from the group of polyethylene glycol, polypropylene glycol, copolymers of propylene glycol and ethylene glycol and derivatives thereof,.

6. Method according to claim 1-5, wherein the concentration of the non-ionic surfactant is at least 1.01 times the critical micelle concentration and preferably at most 7*10⁶ times the critical micelle concentration.

7. Method according to claim 1-6, wherein the concentration of surfactant is between 1 and 50 wt.% of the mobile phase, preferably 1-30 wt.%.

8. Method according to claim 1-7, wherein the said removal is combined with a separation treatment of the said biological material.

9. Method according to claim 1-8, wherein the said biological material is selected from the group of blood, blood derived products, protein containing aqueous systems and fermentation products.

10. Method according to claim 1-9, wherein the gel permeation chromatography is performed using a simulated moving bed system.

11. Method according to claim 10 including a gradient simulated moving bed system.

12. Method according to claim 1-11, wherein the gel material for the gel permeation chromatography is selected from the group consisting of hydrophillic polymers such as dextran (derivates), agarose (derivates) and acrylamide (derivates).

13. Method for producing an aqueous solution or dispersion of biological materials having a reduced content of bioparticles compared to the feed material containing said bioparticles, the method comprising removing the said bioparticles, using the process of any one of the claims 1-12.

14. Use of micelles of surfactants in improving the selectivity and/or the effectivity of gel permeation chromatography for the removal of bioparticles from an aqueous solution or dispersion of biological materials containing said bioparticles.
